# EUROPEAN PATENT APPLICATION

(11) **EP 4 545 506 A1**
(43) Date of publication of application: **30.04.2025**
(21) Application number: 23205335.5
(22) Date of filing: 23.10.2023
(51) Int. Cl.: C05B 13/06

(54) **METHOD FOR PRODUCING A GRANULAR COMPOUND COMPRISING AMMONIUM NITRATE**

(71) Applicant: Yara International ASA, 0277 Oslo (NO)
(72) Inventor: Laurent, Bernard, 5170 Lustin (BE)
(74) Representative: De Clercq & Partners

(57) **Abstract**

The present disclosure relates to methods for reacting a Ca- or Mg- comprising filler with an ammonium nitrate-containing melt or slurry, in the presence of a linear or cyclic polyphosphate, particularly a sodium, potassium, ammonium or magnesium salt thereof. The present disclosure further relates to the product obtained from the methods of the disclosure; to the corresponding filler and its use thereof, particularly in the method of the disclosure.

## Description

### Field:

The present disclosure generally belongs to the field of ammonium nitrate-containing fertilizers and production thereof.

### Background:

Fertilizers based on ammonium nitrate are well-known and have been used for a long time. Such ammonium nitrates are usually processed with an inorganic filler such as limestone or dolomite to thus yield granular products. This can lead to the formation of calcium nitrate, a hygroscopic component, which increases the moisture pick-up of the fertilizer product during storage and accordingly crust/dust formation and caking of the fertilizer product. The formation of calcium nitrate can be accompanied by the release of carbon dioxide and ammonium gases that, in turn, can be entrapped, during the crystallization of the granulated product from the slurry, in the granulated fertilizer products. Such granules exhibit reduced density and reduced hardness that can lead to increased dust formation, abrasion tendency and caking.

It is also well known that such ammonium nitrate/limestone interactions can take place during the scrubbing of gases originating from the fertilizer manufacturing. The dust collected during the scrubbing contains primarily ammonium nitrate and filler particles. Because the scrubbing liquid is usually slightly acidic, the formation of hygroscopic calcium nitrate, which is recycled into the fertilizer, is enhanced.

The fertilizer prior art is, as one can expect, very substantial especially in relation to ammonium nitrate-based fertilizers. French patent 1515488 discloses a process for the manufacture of ammonium nitrate particles with reduced levels of dust/fines. Ammonium nitrate particles are prepared by crystallization of the nitrate in the presence of boric acid or an alkali or ammonium salt thereof to thus substantially reduce the tendency of the ammonium nitrate to be subject to undergo conversion to a less stable crystalline state. Comparable teachings can be found in "Nitrogen, N[deg.] 59, May/June 1969, p. 46/47". The boric acid reagent is, together with ammonium phosphate and ammonium sulphate, present in an additive commercially available under the trade name "Permalene-34". The physical deficiencies of ammonium nitrate fertilizers are abundantly illustrated in the prior art and multiple proposals for improvement are recorded in the relevant literature. A proposal for improving the scrubbing in the manufacture of ammonium nitrate is known from US patent 3,690,820. A method for improving pollution control, attached to the manufacture of ammonium nitrate, is known from US patent 3,985,523.

Methods for improving the granulation of ammonium nitrate and reducing physical deficiencies of the corresponding solid fertilizer particles are known as well. For instance, WO2007042173 (A2) discloses a filler containing an inorganic component, including limestone and dolomite, and a low level of a phosphonic, preferably a polyphosphonic, acid compatibilizing agent. Notwithstanding the considerable R&D resources invested in this domain, ammonium nitrate fertilizers remain subject to considerable physical and stability deficiencies which affect the economics of the technology and its suitability for controllable commercial use.

It is therefore a major object of this invention to provide inorganic fillers having a reduced and controllable reactivity, particularly in relation to fertilizers based on ammonium nitrate, to thus reduce foam formation upon admixture of ammonium nitrate with the filler. It is another object of this invention to provide a fertilizer having a relatively high density and a reduced tendency for dust formation.

### Summary

A first aspect of the present disclosure generally provides a method for producing a granular compound comprising ammonium nitrate, Ca and/or Mg, and a polyphosphate, wherein the method comprises the steps of:
a) preparing or providing a melt or a slurry comprising ammonium nitrate;
b) preparing or providing a linear or cyclic polyphosphate acid or a salt thereof;
c) preparing or providing a filler comprising a calcium and/or magnesium containing compound or material;
d) providing to a granulator the melt or the slurry prepared in step a); the linear or cyclic polyphosphate acid or a salt thereof of step b), in a molar ratio ranging from 1*10E-5 to 1*10E-3 with respect to the molar content of nitrate in the melt or slurry prepared in a); and the filler of step c), thereby producing the granular compound comprising ammonium nitrate, Ca and/or Mg, and a polyphosphate.

The inventor has realised that, in the presence of a polyphosphate, foam formation upon admixture of ammonium nitrate with the filler is reduced. Further, the resulting granular compound or fertiliser has a relatively high density and a reduced tendency for dust formation. Without wishing to be bound by theory, through the aggregation and binding of the polyphosphate anion to the filler, the solubilisation of calcium and magnesium is reduced, thereby preventing the formation of calcium nitrate and ammonium carbonate, in turn reducing the formation of ammonia and carbon dioxide from ammonium carbonate that otherwise results in problematic foaming in the melt or slurry to be granulated.

In certain embodiments according to the method of the disclosure, the linear or cyclic polyphosphate acid or a salt thereof of step b) is added to the melt or the slurry comprising ammonium nitrate of step a), in a molar ratio ranging from 1*10E-5 to 1*10E-3with respect to the molar content of nitrate, thereby obtaining a slurry comprising ammonium nitrate and a polyphosphate.

More in particular, the filler of step c) is added to the slurry comprising ammonium nitrate and a polyphosphate, thereby obtaining a slurry comprising ammonium nitrate, Ca and/or Mg and a polyphosphate, and feeding the slurry comprising ammonium nitrate, Ca and/or Mg and a polyphosphate to a granulator, thereby producing the granular compound comprising ammonium nitrate, Ca and/or Mg, and a polyphosphate. Alternatively, the slurry comprising ammonium nitrate and a polyphosphate is simultaneously with the filler of step c) provided to a granulator, thereby producing the granular compound comprising ammonium nitrate, Ca and/or Mg, and a polyphosphate.

In certain embodiments, the time between adding the filler of step c) to the slurry comprising ammonium nitrate and a polyphosphate and the feeding of the slurry comprising ammonium nitrate, Ca and/or Mg and a polyphosphate to a granulator is less than 30 minutes; or wherein the duration of the addition of the filler of step c) to the slurry comprising ammonium nitrate and a polyphosphate is adjusted such that the amount of Ca and/or Mg, that is solubilized from the filler into the slurry comprising ammonium nitrate, Ca and/or Mg and a polyphosphate as calcium nitrate and/or magnesium nitrate, remains below 0.4 weight%, preferably below 0.1 weight%, based on the total weight of the composition. In particular, the amount of Ca and/or Mg, that is solubilized from the filler in the slurry as calcium nitrate and/or magnesium nitrate is determined as the methanol soluble calcium and/or magnesium nitrate of the composition.

In certain embodiments according to the method of the disclosure, the linear or cyclic polyphosphate acid or a salt thereof of step b) is added to the filler of step c), thereby obtaining a filler comprising Ca and/or Mg and a polyphosphate.

More in particular, the filler comprising Ca and/or Mg and a polyphosphate is added to the melt or the slurry comprising ammonium nitrate of step a), thereby obtaining a slurry comprising ammonium nitrate, Ca and/or Mg and a polyphosphate, and feeding the slurry comprising ammonium nitrate, Ca and/or Mg and a polyphosphate to a granulator, thereby producing the granular compound comprising ammonium nitrate, Ca and/or Mg, and a polyphosphate. Alternatively, the melt or slurry comprising ammonium nitrate of step a) is simultaneously with the filler comprising Ca and/or Mg and a polyphosphate provided to a granulator, thereby producing the granular compound comprising ammonium nitrate, Ca and/or Mg, and a polyphosphate.

In certain embodiments, the time between adding the filler comprising Ca and/or Mg and a polyphosphate to the melt or slurry comprising ammonium nitrate and the feeding of the slurry comprising ammonium nitrate, Ca and/or Mg and a polyphosphate to a granulator is less than 30 minutes; or wherein the duration of the addition of the filler comprising Ca and/or Mg and a polyphosphate to the melt or slurry comprising ammonium nitrate is adjusted such that the amount of Ca and/or Mg, that is solubilized from the filler into the slurry comprising ammonium nitrate, Ca and/or Mg and a polyphosphate as calcium nitrate and/or magnesium nitrate, remains below 0.4 weight%, preferably below 0.1 weight%, based on the total weight of the composition. In particular, the amount of Ca and/or Mg, that is solubilized from the filler in the slurry as calcium nitrate and/or magnesium nitrate is determined as the methanol soluble calcium and/or magnesium nitrate of the composition.

In one embodiment according to the method of the disclosure, the linear or cyclic polyphosphate acid or a salt thereof is a sodium, potassium, ammonium or magnesium salt or an acid of trimetaphosphate, tripolyphosphate, tetrapolyphosphate or hexametaphosphate, in particular a sodium, a magnesium or an ammonium salt or an acid of tripolyphosphate or hexametaphosphate, even more in particular a sodium, magnesium or an ammonium salt or an acid of hexametaphosphate.

In one embodiment according to the method of the disclosure, the pH in the melt or the slurry comprising ammonium nitrate produced in step a), and measured after dilution using demineralised water such that the ammonium nitrate concentration in the diluted sample is 10 weight% ranges from 4.2 to 6.5, measured at a temperature of the diluted sample between 22 to 27 °C.

In another related embodiment of the method of the disclosure, the method further comprises the steps of
- preparing or providing monoammonium phosphate and/or diammonium phosphate; and
- adding the monoammonium phosphate and/or the diammonium phosphate to the melt or slurry of ammonium nitrate of step a), or to the filler of step c),
wherein the molar ratio of the sum of monoammonium phosphate and diammonium phosphate to the sum of the molar content of Ca and Mg in the filler of step c) ranges from 3.5*10E-3 to 3*10E-1.

In another related embodiment of the method of the disclosure, the method further comprises the steps of
- preparing or providing aluminium sulphate, ammonium sulphate, magnesium sulphate, calcium sulphate or a mixture thereof, and
- adding the aluminium sulphate, ammonium sulphate, magnesium sulphate, calcium sulphate or a mixture thereof to the melt or slurry of ammonium nitrate of step a) or to the filler of step c), wherein the molar ratio of the sum of the aluminium sulphate, ammonium sulphate, magnesium sulphate and calcium sulphate to the molar content of nitrate in the melt or slurry of step a) ranges from 1.0*10E-4 to 1.0*10E-1.

Another aspect of the disclosure provides a granular nitrate-based compound produced from the method according to the disclosure. The granular nitrate-based compound comprises ammonium nitrate, Ca and/or Mg; and a linear or cyclic polyphosphate acid or a salt thereof, wherein the molar ratio of the linear or cyclic polyphosphate acid or a salt thereof to the molar content of nitrate ranges from 1*10E-5 to 1*10E-3.

The granular nitrate-based compound according to the disclosure may further comprise:
- monoammonium phosphate and/or diammonium phosphate, wherein the molar ratio of the sum of monoammonium phosphate and diammonium phosphate to the sum of the molar content of Ca and Mg ranges from 3.5*10E-3 to 3*10E-1; and/or
- aluminium sulphate, ammonium sulphate, magnesium sulphate and/or calcium sulphate, wherein the molar ratio of the sum of the aluminium sulphate, ammonium sulphate, magnesium sulphate and calcium sulphate to the molar content of nitrate ranges from 1.0*10E-4 to 1.0*10E-1.

Another aspect of the present disclosure provides for a filler comprising a calcium and/or a magnesium containing compound or material, and a linear or cyclic polyphosphate acid or salt thereof, and its use for admixture with a melt or slurry comprising ammonium nitrate, particularly for reducing foam formation upon admixture with a melt or slurry comprising ammonium nitrate. The linear or cyclic polyphosphate acid or a salt thereof is added in a molar ratio ranging from 1*10E-5 to 1*10E-3 with respect to the molar content of nitrate in the melt or slurry. More in particular, the linear or cyclic polyphosphate acid or a salt thereof is a sodium, potassium, ammonium or magnesium salt or an acid of trimetaphosphate, tripolyphosphate, tetrapolyphosphate or hexametaphosphate.

In certain embodiments, the filler further comprises:
- monoammonium phosphate and/or diammonium phosphate, wherein the molar ratio of the sum of monoammonium phosphate and diammonium phosphate to the sum of the molar content of Ca and Mg ranges from 3.5*10E-3 to 3*1 0E-1; and/or
- aluminium sulphate, ammonium sulphate, magnesium sulphate or calcium sulphate, wherein the molar ratio of the sum of the aluminium sulphate, ammonium sulphate, magnesium sulphate and calcium sulphate to the molar content of nitrate in the melt or slurry ranges from 1.0*10E-4 to 1.0*10E-1.

### Detailed description:

Throughout the description and claims of this specification, the words "comprise" and variations thereof mean "including but not limited to", and they are not intended to (and do not) exclude other moieties, additives, components, integers or steps. Throughout the description and claims of this disclosure, the singular encompasses the plural unless the context otherwise requires. In particular, where the indefinite article is used, the disclosure is to be understood as contemplating plurality as well as singularity, unless the context requires otherwise.

Features, integers, characteristics, compounds, chemical moieties, or groups described in conjunction with a particular aspect, embodiment or example of the disclosure are to be understood to be applicable to any other aspect, embodiment or example described herein unless incompatible therewith. All of the features disclosed in this disclosure (including the description, claims, and abstract), and/or all of the steps of any method or process so disclosed, may be combined in any combination, except combinations where at least some of such features and/or steps are mutually exclusive. The disclosure is not restricted to the details of any foregoing embodiments. The disclosure extends to any novel one, or any novel combination, of the features disclosed in this disclosure (including the description, claims, and abstract), or to any novel one, or any novel combination, of the steps of any method or process so disclosed.

The enumeration of numeric values by means of ranges comprises all values and fractions in these ranges, as well as the cited end points. The terms "ranging from ... to ..." or "range from ... to ..." or "up to" as used when referring to a range for a measurable value, such as a parameter, an amount, a time period, and the like, is intended to include the limits associated to the range that is disclosed.

A first aspect of the present disclosure generally provides a method for producing a granular compound comprising ammonium nitrate, Ca and/or Mg, and a polyphosphate, wherein the method comprises the steps of:
a) preparing or providing a melt or a slurry comprising ammonium nitrate;
b) preparing or providing a linear or cyclic polyphosphate acid or a salt thereof;
c) preparing or providing a filler comprising a calcium and/or magnesium containing compound or material;
d) providing to a granulator the melt or the slurry prepared in step a); the linear or cyclic polyphosphate acid or a salt thereof of step b), in a molar ratio ranging from 1*10E-5 to 1*10E-3 with respect to the molar content of nitrate in the melt or slurry prepared in a); and the filler of step c), thereby producing the granular compound comprising ammonium nitrate, Ca and/or Mg, and a polyphosphate.

Ammonium nitrate can for example be found in a straight nitrogen fertiliser compound such as an ammonium nitrate, an NPK or a calcium nitrate-containing fertiliser, comprising between 10 and 34.4 weight% of nitrogen. An ammonium nitrate melt or slurry typically comprises about 5 wt% or less of water, such as between 0.1 and 5 wt% of water, based on the total weight of the melt or slurry.

As defined herein, a filler, also referred to as an inorganic filler, is a solid comprising a calcium and/or magnesium containing compound or material, such as one or more of a natural or synthetic limestone, dolomite, magnesium carbonate, magnesium oxide, calcium oxide, calcium hydroxide, magnesium hydroxide, magnesium sulphate in the form of kieserite or epsomite, calcium and/or magnesium-containing clays or calcium sulphate.

The inventor has realised that, in the presence of a polyphosphate, foam formation upon admixture of ammonium nitrate with the filler is reduced. Further, a fertiliser is provided that has a relatively high density and a reduced tendency for dust formation. Through the aggregation and binding of the polyphosphate anion to the filler, the solubilisation of calcium and/or magnesium is reduced, thereby preventing the formation of calcium nitrate and ammonium carbonate, in turn reducing the formation of ammonia and carbon dioxide from ammonium carbonate that otherwise results in problematic foaming in the melt to be granulated.

In one embodiment according to method of the disclosure, the linear or cyclic polyphosphate or salt thereof is a sodium, a potassium, an ammonium, or a magnesium salt or an acid of trimetaphosphate, tripolyphosphate, tetrapolyphosphate or hexametaphosphate, in particular a sodium, a magnesium or an ammonium salt or an acid of tripolyphosphate or hexametaphosphate, even more in particular a sodium, a magnesium or an ammonium salt or an acid of hexametaphosphate.

The above-mentioned specific polyphosphates were found to provide optimal foam reduction and increased density and reduced dust formation for the produced ammonium nitrate-based fertiliser. The above-mentioned specific polyphosphates showed optimal binding to the filler and an increased potential in preventing calcium and/or magnesium solubilisation in the ammonium nitrate-based slurry.

The polyphosphate as envisaged herein may be added to the slurry or melt comprising ammonium nitrate, provided in step a) of a method according to the disclosure, or to the filler comprising a calcium and/or magnesium containing compound or material, provided in step c) of a method according to the disclosure.

Accordingly, in certain embodiments according to the method of the disclosure, the linear or cyclic polyphosphate acid or a salt thereof of step b) is added to the melt or the slurry comprising ammonium nitrate of step a), in a molar ratio ranging from 1*10E-5 to 1*10E-3with respect to the molar content of nitrate, thereby obtaining a slurry comprising ammonium nitrate and a polyphosphate.

More in particular, the filler of step c) is added to the slurry comprising ammonium nitrate and a polyphosphate, thereby obtaining a slurry comprising ammonium nitrate, Ca and/or Mg and a polyphosphate, and feeding the slurry comprising ammonium nitrate, Ca and/or Mg and a polyphosphate to a granulator, thereby producing the granular compound comprising ammonium nitrate, Ca and/or Mg, and a polyphosphate. Alternatively, the slurry comprising ammonium nitrate and a polyphosphate is simultaneously with the filler of step c) provided to a granulator, thereby producing the granular compound comprising ammonium nitrate, Ca and/or Mg, and a polyphosphate.

In certain embodiments according to the method of the disclosure, the linear or cyclic polyphosphate acid or a salt thereof of step b) is added to the filler of step c), thereby obtaining a filler comprising Ca and/or Mg and a polyphosphate.

More in particular, the filler comprising Ca and/or Mg and a polyphosphate is added to the melt or the slurry comprising ammonium nitrate of step a), thereby obtaining a slurry comprising ammonium nitrate, Ca and/or Mg and a polyphosphate, and feeding the slurry comprising ammonium nitrate, Ca and/or Mg and a polyphosphate to a granulator, thereby producing the granular compound comprising ammonium nitrate, Ca and/or Mg, and a polyphosphate. Alternatively, the melt or slurry comprising ammonium nitrate of step a) is simultaneously with the filler comprising Ca and/or Mg and a polyphosphate provided to a granulator, thereby producing the granular compound comprising ammonium nitrate, Ca and/or Mg, and a polyphosphate.

In one embodiment according to the method of the disclosure, the pH in the melt or the slurry comprising ammonium nitrate produced in step a), and measured after dilution using demineralised water such that the ammonium nitrate concentration in the diluted sample is 10 weight% ranges from 4.2 to 6.5, measured at a temperature of the diluted sample between 22 to 27 °C.

When the pH is below 4.2, the polyphosphate additive will show less efficiency in preventing the solubilisation of calcium and magnesium ions. Indeed, when the pH of the melt or the slurry produced in step a) is at least 4.2, the chemical equilibrium is shifted towards lower nitrate concentrations, which means that the calcium and/or magnesium desorption from the filler and subsequent solubilisation in the ammonium nitrate-based slurry is less favoured. This is why, when any recycling of a scrubbing liquor for scrubbing the dust of the produced fertiliser is performed, the decomposition of the filler in the presence of the ammonium-nitrate based slurry is increased: the more foam is produced in the slurry to be granulated, the more acid is to be used in the scrubbing process and, upon recycling of the scrubbing liquor to the ammonium nitrate-based slurry, the pH having been lowered, calcium and/or desorption from the filler is increased. Hence, controlling the pH of ammonium nitrate-based slurry is beneficial. In order to limit the ammonia emissions during the granulation process, the pH of the melt or the slurry produced in step a) should be below 6.5.

It is further beneficial to control the residence time of the filler in the ammonium nitrate-based slurry, i.e. the time between the addition of the filler comprising a calcium and/or magnesium containing compound or material and the granulation step. By controlling this residence time, the desorption of calcium and/or magnesium from the filler is, in its turn, controlled, thereby controlling the degradation of the filler.

In certain embodiments, the time between adding the filler of step c) to the slurry comprising ammonium nitrate and a polyphosphate and the feeding of the slurry comprising ammonium nitrate, Ca and/or Mg and a polyphosphate to a granulator is less than 30 minutes; or wherein the duration of the addition of the filler of step c) to the slurry comprising ammonium nitrate and a polyphosphate is adjusted such that the amount of Ca and/or Mg, that is solubilized from the filler into the slurry comprising ammonium nitrate, Ca and/or Mg and a polyphosphate as calcium nitrate and/or magnesium nitrate, in the slurry remains below 0.4 weight%, preferably below 0.1 weight%, based on the total weight of the composition.

In certain embodiments, the time between adding the filler comprising Ca and/or Mg and a polyphosphate to the melt or slurry comprising ammonium nitrate and the feeding of the slurry comprising ammonium nitrate, Ca and/or Mg and a polyphosphate to a granulator is less than 30 minutes; or wherein the duration of the addition of the filler comprising Ca and/or Mg and a polyphosphate to the melt or slurry comprising ammonium nitrate is adjusted such that the amount of Ca and/or Mg, that is solubilized from the filler into the slurry comprising ammonium nitrate, Ca and/or Mg and a polyphosphate as calcium nitrate and/or magnesium nitrate, remains below 0.4 weight%, preferably below 0.1 weight%, based on the total weight of the composition.

The amount of Ca and/or Mg that is solubilized from the filler, in particular solubilized from the calcium and/or magnesium containing compound or material thereof, such as solubilized from limestone or dolomite, may be determined as the methanol soluble calcium and/or magnesium nitrate content of the composition. To this end, a sample of the composition may be transferred to anhydrous methanol. Following the separation of the liquid and solid fractions, the solubilized calcium and/or magnesium, as calcium nitrate and magnesium nitrate respectively, may be quantified in the liquid fraction following removal, such as by evaporation, of the methanol. In particular, a sample of the slurry prior to and after addition of the filler may be analysed in this manner to assess the amount of calcium and/or magnesium solubilized from the filler in the method of the disclosure.

In certain embodiments of the method of the disclosure, the method further comprises the steps of
- preparing or providing monoammonium phosphate and/or diammonium phosphate; and
- adding the monoammonium phosphate and/or the diammonium phosphate to the melt or slurry of ammonium nitrate of step a), or to the filler of step c),
wherein the molar ratio of the sum of monoammonium phosphate and diammonium phosphate to the sum of the molar content of Ca and Mg in the filler of step c) ranges from 3.5*10E-3 to 3*10E-1.

Without being bound by theory, the beneficial effect of the presence of additional monoammonium phosphate and/or diammonium phosphate is the result of an adsorption isotherm. The concentrations of polyphosphate in the slurry are indeed in equilibrium with the concentrations of polyphosphate adsorbed onto the filler. Consequently, the polyphosphate chelates the solubilised calcium and/or magnesium in the slurry, which results in the corresponding desorption of polyphosphate from the filler to retain the chemical equilibrium between adsorbed and solubilised calcium and/or magnesium. In the presence of additional monoammonium phosphate and/or diammonium phosphate, solubilised calcium and/or magnesium precipitates in the form of the corresponding phosphate, such that the polyphosphate remains adsorbed onto the filler and the function of the polyphosphate in protecting the filler is preserved.

In another related embodiment of the method of the disclosure, the method further comprises the steps of
- preparing or providing aluminium sulphate, ammonium sulphate, magnesium sulphate, calcium sulphate or a mixture thereof, and
- adding the aluminium sulphate, ammonium sulphate, magnesium sulphate, calcium sulphate or a mixture thereof to the melt or slurry of ammonium nitrate of step a) or to the filler of step c), wherein the molar ratio of the sum of the aluminium sulphate, ammonium sulphate, magnesium sulphate and calcium sulphate to the molar content of nitrate in the melt or slurry of step a) ranges from 1.0*10E-4 to 1.0*10E-1.

As defined herein, aluminium sulphate is aluminium sulphate that crystallises as Al₂(SO₄)₃.16-18H₂O in the presence of water.

Advantageously, In the presence of sulphate, any calcium nitrate is converted to calcium sulphate, gypsum that precipitates. As a result, the presence of hygroscopic calcium nitrate in the granulated product is reduced. In addition, in the presence of aluminium sulphate, the stability towards thermocycles and the physico-chemical properties of the granulated product are increased. This means that the product can be granulated, cooled, and off-spec particles recycled to the granulation where they are heated again.

In another related aspect of the disclosure, a nitrate-based compound produced from the method according to the method of the disclosure is disclosed. The granular nitrate-based compound comprises ammonium nitrate, Ca and/or Mg; and a linear or cyclic polyphosphate acid or a salt thereof, wherein the molar ratio of the linear or cyclic polyphosphate acid or a salt thereof to the molar content of nitrate ranges from 1*10E-5 to 1*10E-3.

The granular nitrate-based compound according to the disclosure may further comprise:
- monoammonium phosphate and/or diammonium phosphate, wherein the molar ratio of the sum of monoammonium phosphate and diammonium phosphate to the sum of the molar content of Ca and Mg ranges from 3.5*10E-3 to 3*10E-1; and/or
- aluminium sulphate, ammonium sulphate, magnesium sulphate and/or calcium sulphate, wherein the molar ratio of the sum of the aluminium sulphate, ammonium sulphate, magnesium sulphate and calcium sulphate to the molar content of nitrate ranges from 1.0*10E-4 to 1.0*10E-1.

In certain embodiments, the granular nitrate-based compound comprises:
- 60-85 wt%, particularly 70-80 wt%, of ammonium nitrate;
- 14-39 wt%, particularly 19-29 wt%, of a filler comprising a calcium and/or magnesium containing compound or material as described elsewhere herein, preferably 14-39 wt%, particularly 19-29 wt%, of a calcium and/or magnesium containing compound or material;
- 0.05 - 0.5 wt% of a polyphosphate as described elsewhere herein;
- optionally, less than 1 wt%, such as 0-0.5 or 0.1-0.5 wt%, of monoammonium phosphate and/or diammonium phosphate; and
- optionally, less than 1.5 wt%, such as 0-1.5 or 0.2-1.5 wt%, of aluminium sulphate, ammonium sulphate, magnesium sulphate and/or calcium sulphate, particularly aluminium sulphate, as described elsewhere herein;
with wt% based on the total weight of the granular compound.

Another aspect of the present disclosure provides for a filler comprising a calcium and/or a magnesium containing compound or material, and a linear or cyclic polyphosphate acid or salt thereof, and the use of the filler for admixture with a melt or slurry comprising ammonium nitrate, particularly for reducing foam formation upon admixture with a melt or slurry comprising ammonium nitrate and/or for increasing the density and reducing the dust formation of a granular ammonium nitrate based fertilizer compound. The linear or cyclic polyphosphate acid or a salt thereof is added in a molar ratio ranging from 1*10E-5 to 1*10E-3 with respect to the molar content of nitrate in the melt or slurry; and/or the linear or cyclic polyphosphate acid or a salt thereof is added in a molar ratio ranging from 1*10E-5 to 1*10E-2 with respect to the sum of the molar content of Ca and Mg in the filler.

More in particular, the filler comprises a calcium and/or a magnesium containing compound or material, and a linear or cyclic polyphosphate acid or salt thereof, wherein the linear or cyclic polyphosphate acid or a salt thereof is a sodium, potassium, ammonium or magnesium salt or an acid of trimetaphosphate, tripolyphosphate, tetrapolyphosphate or hexametaphosphate.

In certain embodiments, the filler further comprises:
- monoammonium phosphate and/or diammonium phosphate, wherein the molar ratio of the sum of monoammonium phosphate and diammonium phosphate to the sum of the molar content of Ca and Mg ranges from 3.5*10E-3 to 3*10E-1; and/or
- aluminium sulphate, ammonium sulphate, magnesium sulphate or calcium sulphate, wherein the molar ratio of the sum of the aluminium sulphate, ammonium sulphate, magnesium sulphate and calcium sulphate to the molar content of nitrate in the melt or slurry ranges from 1.0*10E-4 to 1.0*10E-1; and/or wherein the molar ratio of the sum of the aluminium sulphate, ammonium sulphate, magnesium sulphate and calcium sulphate to the sum of the molar content of Ca and Mg ranges from 5.0*10E-4 to 5.0*10E-2.

### Examples

### Example 1

A first ammonium nitrate melt and comprising 5 weight% water was prepared and heated to 150 °C on a heating plate under mixing, at pH 4.2. A filler comprising chemical limestone prepared to the Odda process or natural dolomite ("dolomite YaraA" with 50% of its particles having a size below 20 to 25 microns, or "dolomite yaraB" with 50% of its particles having a size below 15 microns) was pre-heated to 100 °C. A phosphate or polyphosphate salt in water was added to the ammonium nitrate melt, thereby providing a second melt. The pre-heated filler was subsequently added to the second melt, thereby providing a slurry. Water was added to achieve a 5 weight% water content in the resulting slurry.

Tables 1a, 1b and 1c shows the corresponding ratios of the raw materials used for preparing the slurry. The content of the final slurry is provided in Tables 1a-1c as well. The slurry was reacted for 20 minutes and samples were collected for analysis after 5, 15 and 20 minutes.

Analysis of the samples was performed at constant water content. In particular, by measuring the weight loss due to evaporation before the analysis, the corresponding water amount to be added was calculated and subsequently added.

The sampling was performed by sampling from the slurry with a metallic spoon and pouring the content of the spoon on a metallic plate at ambient temperature (between 20 and 25 °C), thereby stopping the reaction. The slurry samples at ambient temperature on the metallic plate were transferred in a plastic bag in order to prevent water evaporation.

An aliquot of the sample in the plastic bag was transferred in anhydrous methanol. Calcium nitrate and magnesium nitrate solubilised in anhydrous methanol, however, ammonium nitrate did not. The methanol slurry sample was filtered. The methanol for the methanol filtrate was evaporated, thereby leaving calcium nitrate or magnesium nitrate solids. The solids were dissolved in demineralised water and the resulting water samples were analysed for their calcium or magnesium content, expressed in Tables 1a-1c as calcium nitrate in weight% (on a dry weight basis of the sample).

As can be appreciated from Tables 1a-1c, the experiments involving limestone (Table 1a) showed the lowest reactivity in the presence of higher molecular weight phosphate-containing additives. Further the coarser "Coarse dolomite Yara A" (Table 1b) showed improved stability with respect to the finer "dolomite yaraB" (Table 1c). Furthermore, the results for "Fine dolomite Yara B" showed that in the presence of diammonium phosphate (DAP), the amount of sodium hexametaphosphate required to control the reactivity of the dolomite was significantly reduced.

**Table 1a. Slurry with filler comprising Odda reactive limestone**

| component | A | B | C | D | E | F | G |
|---|---|---|---|---|---|---|---|
| NH₄NO₃ (kg/t) | 771 | 771 | 771 | 771 | 771 | 771 | 771 |
| Filler (kg/t) | 229 | 226 | 223 | 226 | 226 | 226 | 228 |
| (NH₄)₂HPO₄ (kg/t) | | 3 | 6 | | | | |
| Na pyrophosphate (kg/t) | | | | 3 | | | |
| Na tripolyphosphate (kg/t) | | | | | 3 | | |
| Na hexametaphosphate (kg/t) | | | | | | 3 | 1 |
| | | | | | | | |
| Ca nitrate after 5' (wt%) | 1.79 | 1.62 | 1.56 | 2.3 | 0.03 | 0.06 | 0.04 |
| Ca nitrate after 15' (wt%) | 3.77 | 3.13 | 3.56 | 4.23 | 0.04 | 0.03 | 0.05 |
| Ca nitrate after 20' (wt%) | 5.76 | 4.27 | 5.59 | 5.26 | 2.7 | 0.1 | 2.21 |

**Table 1b. Slurry with filler comprising coarse dolomite YARA A**

| component | H | I | J |
|---|---|---|---|
| NH₄NO₃ (kg/t) | 771 | 771 | 771 |
| Filler (kg/t) | 229 | 226 | 228 |
| (NH₄)₂HPO₄ (kg/t) | | | |
| Na pyrophosphate (kg/t) | | | |
| Na tripolyphosphate (kg/t) | | | |
| Na hexametaphosphate (kg/t) | | 3 | 1 |
| | | | |
| Ca nitrate after 5' (wt%) | 0.23 | 0.02 | 0.06 |
| Ca nitrate after 15' (wt%) | 0.32 | 0.03 | 0.12 |
| Ca nitrate after 20' (wt%) | 0.37 | 0.04 | 0.06 |

**Table 1c. Slurry with filler comprising fine dolomite YARA B**

| component | K | L | M | N | O | P |
|---|---|---|---|---|---|---|
| NH₄NO₃ (kg/t) | 771 | 771 | 771 | 771 | 771 | 771 |
| Filler (kg/t) | 229 | 226 | 228 | 225 | 225 | 225 |
| (NH₄)₂HPO₄ (kg/t) | | | | 3 | 3 | 3 |
| Na hexametaphosphate (kg/t) | | 3 | 1 | 0.5 | 0.25 | 0.1 |
| | | | | | | |
| Ca nitrate after 5' (wt%) | 0.87 | 0.04 | 0.05 | 0.053 | 0.029 | 0.074 |
| Ca nitrate after 15' (wt%) | 1.37 | 0.03 | 0.05 | 0.04 | 0.028 | 0.116 |
| Ca nitrate after 20' (wt%) | 1.68 | 0.03 | 0.21 | 0.031 | 0.043 | 0.068 |

### Example 2

A first ammonium nitrate melt and comprising 5 weight% water was prepared and heated to 150 °C on a heating plate under mixing, at pH 4.2. A filler comprising natural limestone was pre-heated to 100 °C. Sodium hexametaphosphate salt in water and, optionally, aluminium sulphate as a solid or in water was added to the ammonium nitrate melt, thereby providing a second melt. The pre-heated filler was subsequently added to the second melt, thereby providing a slurry. Water was added to achieve a 5 weight% water content in the resulting slurry.

Table 2 shows the corresponding ratios of the raw materials used for preparing the slurry. The content of the final slurry is provided in Table 2. The slurry was reacted for 20 minutes. The reacted slurry was granulated in an Eirich PAN granulator of the type TR04, at ambient temperature.

**Table 2. Slurry with filler comprising limestone**

| component | Q | R | S | T | U | V |
|---|---|---|---|---|---|---|
| NH₄NO₃ (kg/t) | 771 | 771 | 771 | 771 | 771 | 771 |
| Filler (kg/t) | 229 | 217 | 226 | 223 | 220 | 214 |
| Al₂(SO₄)₃.18H₂O (kg/t) | | 12 | | 3 | 6 | 12 |
| Na hexametaphosphate (kg/t) | | | 3 | 3 | 3 | 3 |

The resulting granules were sieved and the granules with a size ranging from 2 to 4.75 mm were collected. The collected granules were heated at 100 °C overnight. The heated granules were transferred in a plastic bag where they stayed at ambient temperature for 24 hours. The hardness, the untapped density, and the water pick-up, hereby referred to as the physico-chemical properties of the granules, were measured. The untapped density was measured by weighing separately three samples of granules having a volume of 250 ml and the average of the three determined densities was calculated and reported in Table 3. The hardness was measured on 20 granules with a size ranging between 2.80 and 3.15 mm, each submitted to a mobile dynamometer. The lowest and highest values determined for the hardness were disregarded and the average of the retained hardness values was calculated and reported in Table 3. For the analysis of the water pick-up, a monolayer of granules is poured in an open recipient that is let 2h50 or 19h30 in a climate chamber having 80% relative humidity at 20°C. Further, the granules with a size ranging from 2 to 4.75 mm were submitted to thermocycles. By thermocycles, we mean a temperature treatment varying from 20 to 50 °C every 2 hours. Analysis of the physico-chemical properties was performed after 10, 20 and 30 thermocycles. Also, the swelling, that is the granules with a size ranging below 2 and above 4.75 mm, after each thermocycle was analysed.

Table 3 shows the results of the experiments. As can be appreciated from Table 3, in the absence of sodium hexametaphosphate, the granules showed less stability and resistance to thermocycles. Further, in the presence of sodium hexametaphosphate, the quantity of aluminum sulphate required to improve the physico-chemical properties of the granules was reduced. Further, the experiments confirmed that, in the presence of sodium hexametaphosphate, lower quantities of calcium nitrate were measured.

**Table 3. Physicochemical properties of the granular compounds based on the slurries of Table 2**

| | Q | R | S | T | U | V |
|---|---|---|---|---|---|---|
| Hardness (N) | 21 | 36 | 34 | 53 | 48 | 46 |
| Density (kg/L) | 0.713 | 0.71 | 0.724 | 0.742 | 0.703 | 0.743 |
| Water pick up (2h50) (wt%) | 0.59 | 0.74 | 0.26 | 0.22 | 0.22 | 0.61 |
| Water pick up (19h30) (wt%) | 2.96 | 2.99 | 2.13 | 2.04 | 1.78 | 3.2 |
| Ca-nitrate (wt%) | 0.83 | 0.75 | 0.03 | 0.05 | 0.04 | 0.65 |
| | | | | | | |

| After 10 thermocycles | | | | | | |
|---|---|---|---|---|---|---|
| Hardness (N) | 0 | 37 | 29 | 44 | 47 | 44 |
| Density (kg/L) | 0.479 | 0.712 | 0.632 | 0.773 | 0.743 | 0.722 |
| Granules >4.75 mm (wt%) | 20 | 0 | 2 | 0 | 0 | 0 |
| Granules < 2.00 mm (wt%) | 3 | 2 | 6 | 2 | 2 | 1 |
| | | | | | | |

| After 20 thermocycles | | | | | | |
|---|---|---|---|---|---|---|
| Hardness (N) | / | 35 | 24 | 60 | 47 | 41 |
| Density (kg/L) | dust | 0.746 | 0.730 | 0.790 | 0.750 | 0.746 |
| Granules >4.75 mm (wt%) | 0 | 0 | 2 | 0 | 0 | 0 |
| Granules < 2.00 mm (wt%) | 100 | 1 | 11 | 3 | 2 | 1 |
| | | | | | | |

| After 30 thermocycles | | | | | | |
|---|---|---|---|---|---|---|
| Hardness (N) | / | 31 | 16 | 59 | 47 | 51 |
| Density (kg/L) | dust | 0.696 | 0.626 | 0.780 | 0.740 | 0.749 |
| Granules >4.75 mm (wt%) | 0 | 0 | 1 | 0 | 0 | 0 |
| Granules < 2.00 mm (wt%) | 100 | 1 | 14 | 2 | 1 | 2 |

## Claims

1. A method for producing a granular compound comprising ammonium nitrate, Ca and/or Mg, and a polyphosphate, wherein the method comprises the steps of
a) preparing or providing a melt or a slurry comprising ammonium nitrate;
b) preparing or providing a linear or cyclic polyphosphate acid or a salt thereof;
c) preparing or providing a filler comprising a calcium and/or magnesium containing compound or material;
d) providing to a granulator the melt or the slurry prepared in step a); the linear or cyclic polyphosphate acid or a salt thereof of step b), in a molar ratio ranging from 1*10E-5 to 1*10E-3 with respect to the molar content of nitrate in the melt or slurry prepared in a); and the filler of step c), thereby producing the granular compound comprising ammonium nitrate, Ca and/or Mg, and a polyphosphate.

2. The method according to claim 1, wherein the linear or cyclic polyphosphate acid or a salt thereof of step b) is added to the melt or the slurry comprising ammonium nitrate of step a), in a molar ratio ranging from 1*10E-5 to 1*10E-3with respect to the molar content of nitrate, thereby obtaining a slurry comprising ammonium nitrate and a polyphosphate.

3. The method according to claim 2, wherein:
- the filler of step c) is added to the slurry comprising ammonium nitrate and a polyphosphate, thereby obtaining a slurry comprising ammonium nitrate, Ca and/or Mg and a polyphosphate, and feeding the slurry comprising ammonium nitrate, Ca and/or Mg and a polyphosphate to a granulator, thereby producing the granular compound comprising ammonium nitrate, Ca and/or Mg, and a polyphosphate; or
- the slurry comprising ammonium nitrate and a polyphosphate is simultaneously with the filler of step c) provided to a granulator, thereby producing the granular compound comprising ammonium nitrate, Ca and/or Mg, and a polyphosphate.

4. The method according to claim 3, wherein the time between adding the filler of step c) to the slurry comprising ammonium nitrate and a polyphosphate and the feeding of the slurry comprising ammonium nitrate, Ca and/or Mg and a polyphosphate to a granulator is less than 30 minutes; or wherein the duration of the addition of the filler of step c) to the slurry comprising ammonium nitrate and a polyphosphate is adjusted such that the amount of Ca and/or Mg, that is solubilized from the filler in the slurry as calcium nitrate and/or magnesium nitrate, in the slurry comprising ammonium nitrate, Ca and/or Mg and a polyphosphate remains below 0.4 weight%, preferably below 0.1 weight%, based on the total weight of the composition.

5. The method according to claim 1, wherein the linear or cyclic polyphosphate acid or a salt thereof of step b) is added to the filler of step c), thereby obtaining a filler comprising Ca and/or Mg and a polyphosphate.

6. The method according to claim 5, wherein:
- the filler comprising Ca and/or Mg and a polyphosphate is added to the melt or the slurry comprising ammonium nitrate of step a), thereby obtaining a slurry comprising ammonium nitrate, Ca and/or Mg and a polyphosphate, and feeding the slurry comprising ammonium nitrate, Ca and/or Mg and a polyphosphate to a granulator, thereby producing the granular compound comprising ammonium nitrate, Ca and/or Mg, and a polyphosphate; or
- the melt or slurry comprising ammonium nitrate of step a) is simultaneously with the filler comprising Ca and/or Mg and a polyphosphate provided to a granulator, thereby producing the granular compound comprising ammonium nitrate, Ca and/or Mg, and a polyphosphate.

7. The method according to claim 6 wherein the time between adding the filler comprising Ca and/or Mg and a polyphosphate to the melt or slurry comprising ammonium nitrate and the feeding of the slurry comprising ammonium nitrate, Ca and/or Mg and a polyphosphate to a granulator is less than 30 minutes; or wherein the duration of the addition of the filler comprising Ca and/or Mg and a polyphosphate to the melt or slurry comprising ammonium nitrate is adjusted such that the amount of Ca and/or Mg, that is solubilized from the filler in the slurry as calcium nitrate and/or magnesium nitrate, in the slurry comprising ammonium nitrate, Ca and/or Mg and a polyphosphate remains below 0.4 weight%, preferably below 0.1 weight%, based on the total weight of the composition.

8. The method according to any one of claims 1 to 7, wherein the linear or cyclic polyphosphate acid or a salt thereof is a sodium, potassium, ammonium or magnesium salt or an acid of trimetaphosphate, tripolyphosphate, tetrapolyphosphate or hexametaphosphate, in particular a sodium, a magnesium or an ammonium salt or an acid of tripolyphosphate or hexametaphosphate, even more in particular a sodium, magnesium or an ammonium salt or an acid of hexametaphosphate.

9. The method according to any one of claims 1 to 8, wherein the pH in the melt or the slurry comprising ammonium nitrate produced in step a), and measured after dilution using demineralised water such that the ammonium nitrate concentration in the diluted sample is 10 wt% ranges from 4.2 to 6.5, measured at a temperature of the diluted sample between 22 to 27 °C.

10. The method according to any one of claims 1 to 9, further comprising the steps of
- preparing or providing monoammonium phosphate and/or diammonium phosphate; and
- adding the monoammonium phosphate and/or the diammonium phosphate to the melt or slurry of ammonium nitrate of step a), or to the filler of step c),
wherein the molar ratio of the sum of monoammonium phosphate and diammonium phosphate to the sum of the molar content of Ca and Mg in the filler of step c) ranges from 3.5*10E-3 to 3*10E-1.

11. The method according to any one of claims 1 to 10, further comprising the steps of
- preparing or providing aluminium sulphate, ammonium sulphate, magnesium sulphate, calcium sulphate or a mixture thereof, and
- adding the aluminium sulphate, ammonium sulphate, magnesium sulphate, calcium sulphate or a mixture thereof to the melt or slurry of ammonium nitrate of step a) or to the filler of step c), wherein the molar ratio of the sum of the aluminium sulphate, ammonium sulphate, magnesium sulphate and calcium sulphate to the molar content of nitrate in the melt or slurry of step a) ranges from 1.0*10E-4 to 1.0*10E-1.

12. A granular nitrate-based compound produced by the method according to any one of claims 1 to 11, comprising ammonium nitrate, Ca and/or Mg; and a linear or cyclic polyphosphate acid or a salt thereof, wherein the molar ratio of the linear or cyclic polyphosphate acid or a salt thereof to the molar content of nitrate ranges from 1*10E-5 to 1*10E-3.

13. The nitrate-based compound according to claim 12, further comprising:
- monoammonium phosphate and/or diammonium phosphate, wherein the molar ratio of the sum of monoammonium phosphate and diammonium phosphate to the sum of the molar content of Ca and Mg ranges from 3.5*10E-3 to 3*10E-1; and/or
- aluminium sulphate, ammonium sulphate, magnesium sulphate and/or calcium sulphate, wherein the molar ratio of the sum of the aluminium sulphate, ammonium sulphate, magnesium sulphate and calcium sulphate to the molar content of nitrate ranges from 1.0*10E-4 to 1.0*10E-1.

14. Use of a filler comprising a calcium and/or a magnesium containing compound or material, and a linear or cyclic polyphosphate acid or salt thereof, for admixture with a melt or slurry comprising ammonium nitrate, particularly for reducing foam formation upon admixture with a melt or slurry comprising ammonium nitrate,
wherein the linear or cyclic polyphosphate acid or a salt thereof is added in a molar ratio ranging from 1*10E-5 to 1*10E-3 with respect to the molar content of nitrate in the melt or slurry;
particularly wherein the linear or cyclic polyphosphate acid or a salt thereof is a sodium, potassium, ammonium or magnesium salt or an acid of trimetaphosphate, tripolyphosphate, tetrapolyphosphate or hexametaphosphate.

15. Use according to claim 14 wherein the filler further comprises:
- monoammonium phosphate and/or diammonium phosphate, wherein the molar ratio of the sum of monoammonium phosphate and diammonium phosphate to the sum of the molar content of Ca and Mg ranges from 3.5*10E-3 to 3*10E-1; and/or
- aluminium sulphate, ammonium sulphate, magnesium sulphate or calcium sulphate, wherein the molar ratio of the sum of the aluminium sulphate, ammonium sulphate, magnesium sulphate and calcium sulphate to the molar content of nitrate in the melt or slurry ranges from 1.0*10E-4 to 1.0*10E-1.
